# FASCICULE DE BREVET EUROPEEN

(11) **EP 1 315 930 B1**
(45) Date de publication et mention de la délivrance du brevet: **12.05.2004**
(21) Numéro de dépôt: 01958168.5
(22) Date de dépôt: 24.07.2001
(51) Int. Cl.: F16L 37/084

(54) **EMBOUT DE CONNEXION RAPIDE**
SCHNELLVERBINDUNGSSTÜCK
QUICK-CONNECT COUPLING

(30) Priorité: 24.07.2000 FR 0009662
(43) Date de publication de la demande: 04.06.2003
(73) Titulaire: Etablissements CAILLAU, 92130 Issy-les-Moulineaux (FR)
(72) Inventeur: DETABLE, Pascal, F-41130 GIEVRES (FR); PREVOT, Fabrice, 41130 Selles Sur Cher (FR); RIGOLLET, Nicolas, F-41200 ROMORANTIN LANTHENAY (FR)
(74) Mandataire: Intès, Didier Gérard André
(86) Numéro de dépôt international: PCT/FR2001/002410
(87) Numéro de publication internationale: WO 2002/008656

(56) Documents cités:
- EP-A- 0 651 198
- EP-A- 0 719 971
- WO-A-98/57061
- US-A- 5 366 259
- US-A- 5 971 445

## Description

La présente invention concerne un embout de connexion rapide susceptible d'être emmanché sur un tube qui présente une surface d'accrochage sensiblement radiale distante de son extrémité libre, l'embout comprenant un corps qui présente une cavité interne ayant une première partie susceptible de coopérer avec des moyens d'étanchéité pour établir une liaison étanche avec le tube et une deuxième partie, qui est située entre la première partie de la cavité et l'entrée du corps de l'embout et dans laquelle est disposé un anneau de verrouillage retenu contre un arrachement hors du corps de l'embout par des moyens de retenue, cet anneau présentant au moins une zone de verrouillage située dans une région dans laquelle son rayon est minimum et au moins un pontet de déverrouillage situé dans une région dans laquelle son rayon est maximal, l'anneau étant susceptible, à partir d'une configuration de verrouillage dans laquelle la zone de verrouillage est apte à coopérer avec la surface d'accrochage du tube, d'être déformé élastiquement par une pression sur le pontet pour adopter une configuration de déverrouillage, la paroi de la cavité interne du corps présentant au moins une fente qui débouche dans la deuxième partie de la cavité et à travers laquelle dépasse ledit pontet de déverrouillage, l'anneau de verrouillage étant constitué par une bande de métal déformée plastiquement pour présenter, au moins, ladite zone de verrouillage et ledit pontet.

Un tel embout de connexion rapide est connu par le document EP-A-0 651 198. Il donne globalement satisfaction, mais la demanderesse s'est aperçue qu'il pouvait être amélioré.

Ainsi, pour certaines applications, en particulier celles dans lesquelles le tube présente un petit diamètre (de l'ordre de 6 à 12 mm, par exemple 8 mm) la longueur de la bande dans laquelle est réalisé l'anneau de verrouillage est faible. Dans le document EP-A-0 651 198, on propose, dans certaines variantes, de réaliser l'anneau de verrouillage sous la forme d'un anneau fermé, dont on solidarise les deux extrémités, par exemple par soudure ou par accrochage. De tels moyens de solidarisation sont délicats à utiliser pour une connexion de petit diamètre. En effet, la surface nécessaire à une soudure de bonne qualité ou à un bon accrochage est relativement importante et utilise une partie significative de la longueur de la bande dans laquelle est réalisé l'anneau de verrouillage. Sur cette partie significative, l'anneau de verrouillage est pratiquement privé de sa capacité à se déformer élastiquement dans le sens radial. De ce fait, il devient localement "trop rigide", de sorte que des efforts devant être mis en oeuvre pour presser le pontet de manière à réaliser un déverrouillage sont très importants.

L'invention vise à remédier à ces inconvénients pour une connexion du type cité en préambule, utilisant un anneau de type fermé.

Ce but est atteint grâce au fait que l'anneau de verrouillage est fermé sur lui-même et présente deux extrémités qui se chevauchent et qui sont susceptibles de glisser l'une contre l'autre lors d'une déformation élastique de l'anneau.

Ainsi, les deux extrémités de l'anneau qui se chevauchent sont guidées l'une par l'autre lors de la déformation élastique de l'anneau. Les extrémités n'étant pas fixées l'une à l'autre, la capacité de l'anneau à se déformer élastiquement jusqu'à ce que sa zone de verrouillage se trouve sur un diamètre permettant le déverrouillage est largement augmentée, puisque le chevauchement entre les deux extrémités de l'anneau met à disposition une "longueur morte" disponible pour augmenter ce diamètre. De manière générale, quelle que soit l'application considérée, le contact de glissement selon l'invention confère à l'anneau de verrouillage des propriétés voisines de celles d'un anneau fermé, par exemple du point de vue de sa résistance mécanique, tout en facilitant grandement la manipulation pour le déverrouillage.

Outre le guidage précité qui est réalisé dans la direction radiale, les extrémités de l'anneau sont avantageusement maintenues axialement par le corps de l'embout, en particulier par les bords de la fente à travers laquelle dépasse le pontet, lorsque ces extrémités sont prévues sur le pontet.

L'anneau présente avantageusement des moyens qui sollicitent ses deux extrémités en contact l'une contre l'autre.

Il peut s'agir de déformations plastiques, éventuellement associées à l'élasticité générale de l'anneau.

De préférence, le pontet de déverrouillage est formé par lesdites extrémités de l'anneau en contact de glissement.

C'est ainsi précisément dans la zone qui est directement sollicitée lors du déverrouillage que l'on dispose de la longueur morte précitée.

Avantageusement, l'embout présente des moyens pour guider le glissement relatif des deux extrémités de l'anneau de verrouillage.

Ces moyens comprennent avantageusement un système à patte et à fente ou encoche qui équipe les deux extrémités de l'anneau de verrouillage.

Avantageusement, dans la région du pontet de déverrouillage, la bande dans laquelle est réalisé l'anneau de verrouillage est sensiblement parallèle à la direction axiale de l'embout, tandis que la zone de verrouillage présente une déformation plastique formant une arête de verrouillage rentrante qui, par rapport à la direction axiale de l'embout, est inclinée vers l'axe de l'embout dans le sens allant en s'éloignant de l'entrée du corps.

Ainsi, pour le déverrouillage, l'utilisateur exerce une pression sur le pontet qui forme une surface perpendiculaire à la direction de l'effort de pression qui est appliqué radialement. On obtient ainsi une répartition optimum de cet effort de pression.

En revanche, dans la zone de verrouillage, l'anneau est déformé pour être incliné par rapport à la direction axiale de l'embout. De ce fait, l'arête de verrouillage est apte à coopérer avec différentes formes de surfaces d'accrochage sur le tube, qu'il s'agisse d'un épaulement, d'un renflement ou d'une rainure dans laquelle s'insère la zone de verrouillage.

La déformation de l'anneau de déverrouillage conférant sa forme rentrante à l'arête de verrouillage, augmente la rigidité de l'anneau et sa capacité de retour élastique après une sollicitation de déverrouillage. En effet, l'essentiel des déformations de l'anneau qui lui donnent sa forme générale (avec, en particulier, la zone de verrouillage et le pontet) sont réalisées par des pliures le long de lignes dirigées axialement. Le fait de réaliser l'arête de verrouillage sous une forme rentrante donne une déformation dans une autre direction, qui augmente localement la résistance mécanique de l'anneau. La pression exercée sur le pontet pour le déverrouillage ne modifie pas ou pratiquement pas la conformation de l'arête de verrouillage qui est relativement rigide. Elle se comporte comme un tout, qui est simplement écarté de l'axe de l'embout lors du déverrouillage. Pour le verrouillage, elle reprend sa position initiale sans avoir été déformée. Sa forme reste donc optimale pour coopérer avec la surface d'accrochage, même après de nombreuses sollicitations de l'anneau.

Ce dernier est par exemple réalisé dans une bande métallique en acier inoxydable ou en acier ayant subi un traitement de surface le rendant résistant à la corrosion. L'acier a également subi une trempe ou une autre opération lui donnant une élasticité suffisante. La forme rentrante de l'arête de verrouillage augmente encore cette élasticité, précisément dans la région dans laquelle elle est la plus nécessaire.

Une configuration avantageuse est obtenue grâce au fait que l'anneau de verrouillage présente deux zones de verrouillage, qui sont disposées en vis-à-vis de part et d'autre d'un plan diamétral et qui sont reliées au pontet de déverrouillage par des tronçons de liaison qui se trouvent dans la cavité interne du corps et au fait que ces tronçons de liaison sont parallèles à la direction axiale de l'embout.

En choisissant que, non seulement le pontet de déverrouillage, mais également les tronçons de liaison de ce pontet au reste de l'anneau soient parallèles à la direction axiale de l'embout, on réalise les déformations donnant leurs formes rentrantes aux arêtes de verrouillage seulement précisément dans les régions dans lesquelles se trouvent ces arêtes, en augmentant ainsi la rigidité de l'anneau localement dans ces zones, alors que les tronçons de liaison sont facilement écartés (ce qui écarte les zones de verrouillage) par une pression du pontet.

Avantageusement, la bande formant l'anneau de verrouillage est vrillée entre le pontet et la zone de verrouillage.

Du fait de ce vrillage, la ou les portions de la bande sur lesquelles se trouvent les zones de verrouillage forment des surfaces prismatiques ou tronconiques très simples à réaliser.

Avantageusement, l'anneau de verrouillage présente au moins une ligne de pliage s'étendant sensiblement transversalement par rapport à la direction axiale de l'embout, la zone de verrouillage étant formée par une partie de l'anneau qui se trouve à l'arrière de cette ligne par rapport à l'entrée de l'embout et qui est incurvée vers l'axe de l'embout à partir de ladite ligne.

La direction générale de cette ligne de pliage est sensiblement perpendiculaire à celle des pliures axiales par lesquelles on a donné sa forme générale à l'anneau de verrouillage. La rigidité et l'élasticité de l'anneau sont augmentées selon cette ligne.

Dans ce cas, avantageusement, l'anneau de verrouillage présente une première ligne de pliage, à l'avant de laquelle est formée une rampe de guidage pour l'emmanchement de l'embout sur le tube et une deuxième ligne de pliage à l'arrière de laquelle est formée la zone de verrouillage

Les deux lignes de pliage sont avantageusement formées sur les mêmes secteurs angulaires de l'anneau.

Entre ces lignes, l'anneau forme une portion de cylindre axial. Les deux lignes de pliage délimitant les deux portions inclinées (par exemple tronconiques) que constituent la rampe de guidage et la zone de verrouillage de part et d'autre de cette portion de cylindre confèrent encore à la zone de verrouillage une rigidité plus grande, qui évite sa déformation plastique lors des diverses sollicitations auxquelles l'anneau est soumis après sa mise en place dans l'embout.

En variante, l'arête de verrouillage est formée à l'extrémité libre d'une languette découpée dans la bande et rabattue vers l'axe de l'embout, cette languette étant rattachée à la bande par sa base située du côté de l'entrée du corps.

Cette simple découpe et ce rabat constituent un mode de réalisation particulièrement simple. La ligne de rattachement de la languette à la bande est globalement disposée transversalement par rapport aux lignes générales de pliage de l'anneau de verrouillage, de sorte que, également le long de cette ligne, la rigidité et l'élasticité sont augmentées.

L'invention sera bien comprise et ses avantages apparaîtront mieux à la lecture de la description détaillée qui suit, de modes de réalisation représentés à titre d'exemples non limitatifs. La description se réfère aux dessins annexés sur lesquels :
- la figure 1 est une vue extérieure d'une connexion comprenant un embout conforme à l'invention ;
- la figure 2 est une coupe selon la ligne II-II de la figure 1 ;
- la figure 3 est une vue en bout selon la flèche III de la figure 1, montrant l'embout conforme à l'invention sans le tube de la connexion ;
- la figure 4 est une coupe selon la ligne IV-IV de la figure 3 ;
- la figure 5 est une vue en plan d'un anneau de verrouillage conforme à l'invention, prise dans une direction correspondant à celle de la flèche V de la figure 1 ;
- la figure 5A est une coupe selon la ligne VA-VA de la figure 5 ;
- la figure 5B est une vue selon la flèche VB de la figure 5 ;
- la figure 6 est une vue de côté de la figure 5 ;
- les figures 7 et 8 sont des vues analogues à celles des figures 5 et 6, pour une variante de réalisation ;
- les figures 9 et 10 sont des vues analogues aux figures 5 et 6 pour une autre variante ;
- la figure 11 est une vue en bout analogue à celle de la figure 3, pour une variante de réalisation ;
- la figure 12 est une coupe selon la ligne XII-XII de la figure 11 ;
- la figure 13 montre le tube de la connexion de la figure 12 selon la flèche XIII de cette figure ;
- la figure 14 est une vue en plan, dans une direction correspondant à celle de la figure 3, d'un organe de verrouillage selon une variante de réalisation ;
- la figure 14A est une coupe selon la ligne XIVA-XIVA de la figure 14 ; et
- la figure 15 est une vue en coupe longitudinale du corps d'un embout adapté à cette variante.

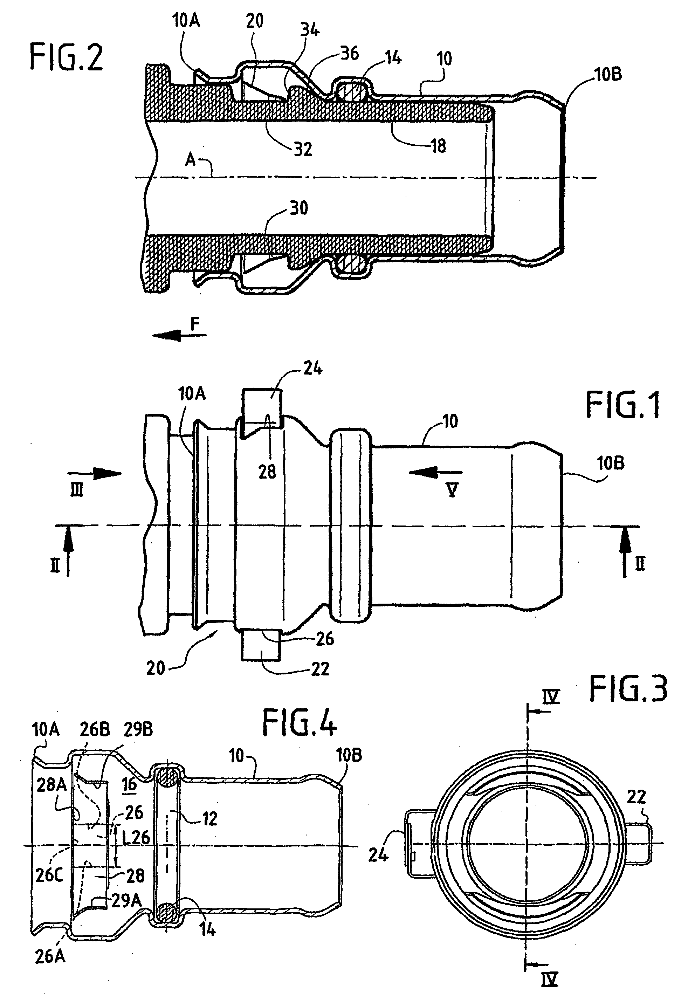

L'embout de connexion rapide des figures 1 à 4 comprend un corps 10 ayant globalement une symétrie de révolution autour d'un axe A. Ce corps présente une cavité interne dont une première partie 12 (en l'espèce, une gorge annulaire) contient un joint annulaire d'étanchéité 14.

La cavité interne comprend une deuxième partie 16 qui est située entre la première partie et l'entrée 10A du corps de l'embout. Cette entrée est celle des extrémités du corps par laquelle on introduit le tube 18 pour réaliser la connexion.

On définit la direction vers l'avant comme étant celle qui va vers l'entrée 10A du corps de l'embout, tandis que la direction vers l'arrière va vers l'extrémité opposée 10B.

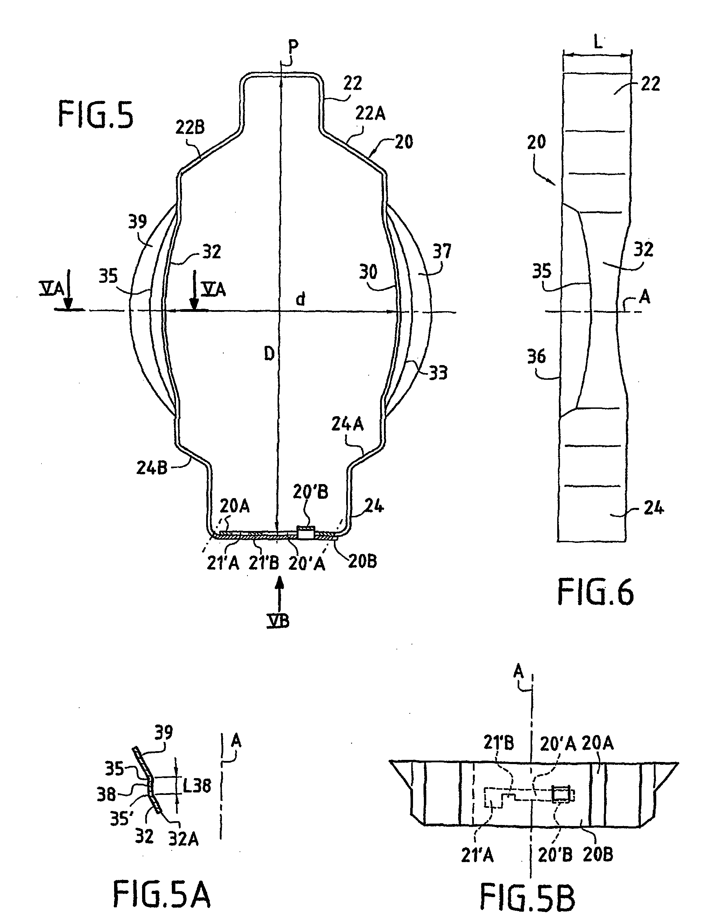

Dans la deuxième partie 16 de la cavité interne est disposé un anneau de verrouillage 20, mieux visible sur les figures 5 et 6. Cet anneau est formé à partir d'une bande de métal enroulée sur elle-même et dont les deux extrémités 20A et 20B se rejoignent.

Par exemple, la bande est réalisée en acier dit "à ressort", et son épaisseur est de l'ordre de 2/10 millimètres à 8/10 millimètres, de préférence de l'ordre de 3/10 millimètres à 4/10 millimètres.

La largeur L de la bande, mesurée dans la direction de l'axe A, est par exemple de l'ordre de 3 à 6 millimètres, de préférence de l'ordre de 5 millimètres. Comme on le voit sur la figure 5, l'anneau de verrouillage présente une forme en général oblongue, et il présente deux pontets, respectivement 22 et 24, qui sont disposés en regard l'un de l'autre selon son grand diamètre D. Les deux extrémités 20A et 20B se rejoignent pour former la région centrale du pontet 24.

La paroi de la deuxième partie 16 de la cavité du corps de l'embout présente deux fentes, respectivement 26 et 28, à travers lesquelles dépassent respectivement chacun des deux pontets 22 et 24.

Le plus petit diamètre d de l'anneau de verrouillage est sensiblement perpendiculaire à son grand diamètre D. Deux zones de verrouillage, respectivement 30 et 32, sont disposées en regard de l'une de l'autre de part et d'autre du plan diamétral P correspondant au grand diamètre D en étant écartées selon le petit diamètre d. On comprend que, lorsque l'on exerce une pression sur les pontets 22 et 24 de manière à les rapprocher de l'axe A de l'embout, on écarte les deux zones de verrouillage 30 et 32.

Comme on le voit sur la figure 2, le tube 18 présente une surface d'accrochage 34, par exemple formée sur la face arrière d'un bourrelet 36. Lorsque le tube est emmanché dans l'embout, sa portée cylindrique, située entre son extrémité libre et le bourrelet 36, coopère avec le joint d'étanchéité 14 tandis que les zones de verrouillage 30 et 32 de l'anneau 20 reposent contre la face arrière 34, à la base du bourrelet.

Dans la mesure où l'anneau de verrouillage 20 est retenu contre un arrachement hors du corps de l'embout dans la direction F allant vers l'avant (par exemple par les bords avant 26C et 28A des fenêtres 26 et 28), les arêtes de verrouillage empêchent l'arrachement du tube hors de l'embout. Lorsque, par une pression des pontets, on écarte suffisamment l'une de l'autre les zones de verrouillage, elles déterminent entre elles une distance diamétrale qui est supérieure au diamètre du bourrelet 36, ce qui permet de séparer le tube de l'embout.

Les extrémités 20A et 20B de l'anneau 20 qui forment le pontet 24 peuvent glisser l'une sur l'autre. Elles se recouvrent selon la base du U que forme le pontet 24 dont une partie est arrachée sur la figure 5. L'extrémité 20B porte une patte 20'B formée par découpe et pliage, cette patte traversant une fente 20'A que présente l'extrémité 20A. Ainsi, les extrémités 20A et 20B peuvent glisser l'une sur l'autre parallèlement au diamètre d en étant parfaitement guidées l'une par rapport à l'autre. L'extrémité de la patte 20'B est recourbée pour éviter son extraction intempestive hors de la fente 20'A. Cette dernière présente une portion élargie 21'A permettant l'insertion de la patte et un étranglement 21'B formant butée de fin de course pour la patte 20'B.

On peut remplacer la fente 20'A par une encoche pratiquée sur un côté de la partie de l'extrémité 20A ou 20B qui forme la base du U du pontet 24, et former dans l'autre extrémité (20B ou 20A) une patte coopérant avec cette encoche.

Il faut noter que l'on peut réaliser le pontet 22 de manière analogue au pontet 24, avec des extrémités en contact de glissement.

Dans la variante représentée, le pontet 22 est formé par une portion continue de la bande qui constitue l'anneau de verrouillage. Dans ce cas, lorsqu'on exerce une pression sur les pontets en vue du déverrouillage, le pontet 24 s'écarte par glissement des extrémités de la bande, tandis que le pontet 22 supporte les efforts de réaction et est davantage sollicité de manière active après la venue en butée de la patte 20'B contre l'étranglement 21'B.

Dans la région du pontet 22 ou 24, la bande dans laquelle est formé l'anneau de verrouillage est parallèle à la direction de l'axe A de l'embout de la connexion.

Le pontet 22 est raccordé aux zones de verrouillage 30 et 32 par deux tronçons de liaison, respectivement 22A et 22B. De même, le pontet 24 est raccordé aux zones de verrouillage par les tronçons de liaison, 24A et 24B. Ces tronçons de liaison sont également parallèles à la direction de l'axe A.

En revanche, comme on le voit mieux en considérant la figure 5A, les zones de verrouillage sont déformées vers l'axe A dans le sens allant en s'éloignant de l'entrée de l'embout. Ces déformations donnent aux arêtes de verrouillage 30A et 32A une forme rentrante. Ces déformations sont donc localisées dans les zones de verrouillage, tandis que les pontets et leurs tronçons de liaison restent parallèles à l'axe A. De ce fait, lorsqu'on exerce une pression sur les pontets, leurs tronçons de liaison ont facilement tendance à s'écarter l'un de l'autre. En revanche, en raison des efforts de torsion dans la région des zones de verrouillage liés aux déformations précitées, les zones de verrouillage restent relativement rigides. Ainsi, lorsque les tronçons de liaison des pontets aux zones de verrouillage s'écartent, les deux arêtes de verrouillage 30A et 32A s'éloignent l'une de l'autre en conservant sensiblement leurs courbures.

L'anneau de verrouillage présente des rampes de guidage facilitant l'emmanchement de l'embout sur le tube. Les rampes, respectivement désignées par les références 37 et 39, se trouvent globalement dans le prolongement axial des arêtes de verrouillage, respectivement 30 et 32 et couvrent sensiblement les mêmes secteurs angulaires que ces dernières. Ces rampes sont écartées dans le sens allant vers l'avant, ce qui favorise l'insertion du tube dans l'embout.

Sur la figure 6, on voit que l'anneau de verrouillage 20 présente une ligne de pliage 35 qui s'étend sensiblement transversalement par rapport à la direction de l'axe A. La zone de verrouillage 32 est formée par une partie de l'anneau 20 qui se trouve à l'arrière de cette ligne 35, tandis que la rampe de guidage 39 se trouve à l'avant.

De l'autre côté de l'anneau de verrouillage par rapport au plan P, une ligne de pliage 33 sépare la zone de verrouillage 30 et la rampe 37.

La rampe 37 et la zone de verrouillage 30 sont inclinées dans le même sens par rapport à l'axe A. La ligne de pliage 33 constitue une zone d'inflexion entre ces deux portions inclinées. Il en va de même pour la ligne de pliage 35 entre la rampe 39 et la zone de verrouillage 32.

Plus précisément, on voit sur la figure 5A, que, considéré en coupe transversale dans la région des zones de verrouillage, et à partir de l'entrée de l'embout, l'anneau présente successivement une rampe inclinée 39, une première ligne de pliage 35, une portion de bande en forme de portion de cylindre 38, une deuxième ligne de pliage 35' et la zone de verrouillage 32.

La largeur L38 de la portion de cylindre 38, mesurée dans la direction de l'axe A, est par exemple de l'ordre de 1 mm. En multipliant ainsi les déformations dans le sens transversal à l'axe A que forment les lignes de pliage 35 et 35', on augmente encore localement la rigidité de l'anneau de verrouillage et sa capacité à retrouver élastiquement sa configuration de verrouillage après une sollicitation de déverrouillage.

Ces lignes de pliage et les propriétés qu'elles confèrent à l'anneau pourraient être présentes indépendamment du fait que celui-ci soit ouvert, fermé, à extrémités glissantes ou fixées ensemble.

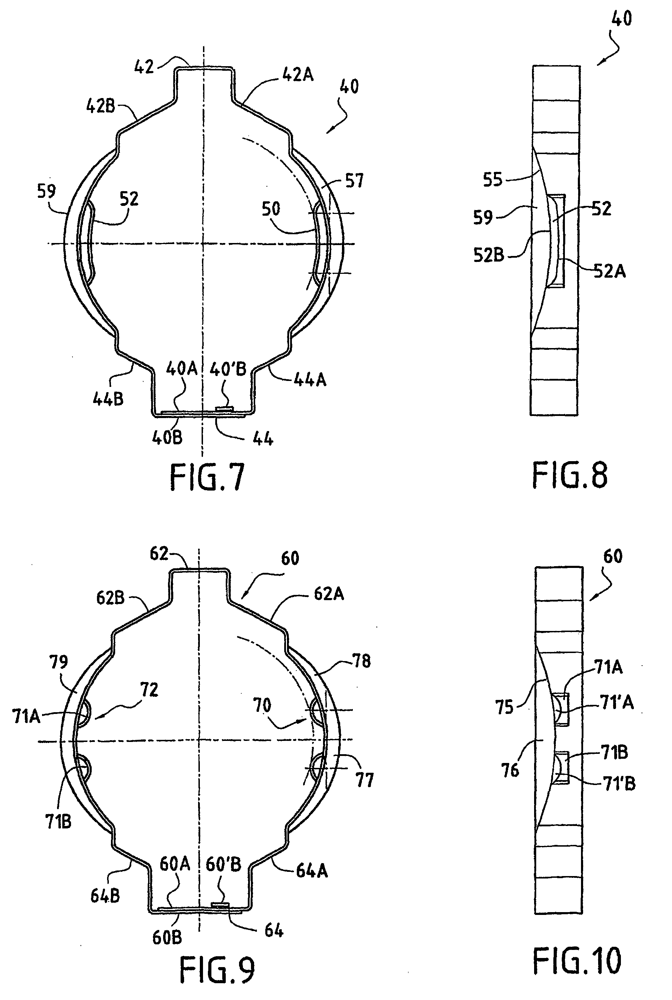

Les figures 7 et 8 montrent un anneau de verrouillage 40 qui pourrait être utilisé dans l'embout selon l'invention, en lieu et place de l'anneau 20. Pour simplifier, on utilise sur ces figures les mêmes références numériques que sur les figures 1 à 6, augmentées de 20.

La forme générale de l'anneau 40 est la même que celle de l'anneau 20. Toutefois, les zones de verrouillage 50 et 52 sont réalisées de manière différente. Elles sont en effet réalisées par des languettes qui sont découpées dans la bande et qui sont rabattues vers l'axe A. Les arêtes de verrouillage proprement dites sont formées aux extrémités libres de ces languettes, telles que l'extrémité libre 52A visible sur la figure 8.

Ces languettes 50 et 52 sont rattachées à la bande par leur base, comme la base 52B de la languette 52, visible sur la figure 8. Cette base est tournée vers l'entrée de l'embout par rapport à l'extrémité libre 52A et l'on voit qu'elle coïncide avantageusement avec la ligne de pliage 55 qui réalise une démarcation entre la rampe 59 et la portion de la bande dans laquelle est découpée la languette. Cette portion peut elle-même être parallèle à l'axe A de l'embout.

Les figures 9 et 10, sur lesquelles on utilise les mêmes références numériques que sur les figures 1 à 6, augmentées de 40, montrent un anneau de verrouillage 60 selon une variante des figures 7 et 8. Cette fois, plutôt que de former chaque zone de verrouillage par une languette unique, on a réalisé plusieurs entailles dans la bande.

Par exemple, chaque zone de verrouillage comprend, à l'instar de la zone de verrouillage 72, deux entailles 71A et 71B qui sont pratiquées dans la bande de manière à laisser subsister une languette ou "crevé" respectivement 71'A et 71'B. Comme on le voit sur la figure 10, ces crevés sont rattachés à la bande par leur base, coïncidant avec la ligne de pliage 75 qui sépare la rampe 79 de la portion de la bande dans laquelle sont pratiquées les entailles. Bien entendu, selon les dimensions diamétrales du tube et de l'embout, on peut choisir de pratiquer plus ou moins d'entailles. Les arêtes de verrouillage proprement dites sont formées par les bords libres des languettes 71'A et 71'B réalisés par les entailles 71A et 71B.

Les languettes 71'A, 71'B, de même que les languettes 50 et 52, peuvent être réalisées par des bossages déformés jusqu'à entailler la bande pour former les extrémités libres des languettes.

Ces languettes fabriquées par emboutissage et entaillage de la bande, donc avec un écrouissage important, présentent l'avantage d'être extrêmement résistantes aux efforts longitudinaux, parallèles à l'axe de l'embout.

Comme on le voit sur les figures 6, 8 et 10, les lignes de pliage à l'instar des lignes 35, 55 et 75 sont avantageusement concaves lorsqu'on les regarde depuis l'avant de l'anneau, c'est-à-dire depuis l'entrée de l'embout, les extrémités de ces lignes rejoignant le bord avant dudit anneau.

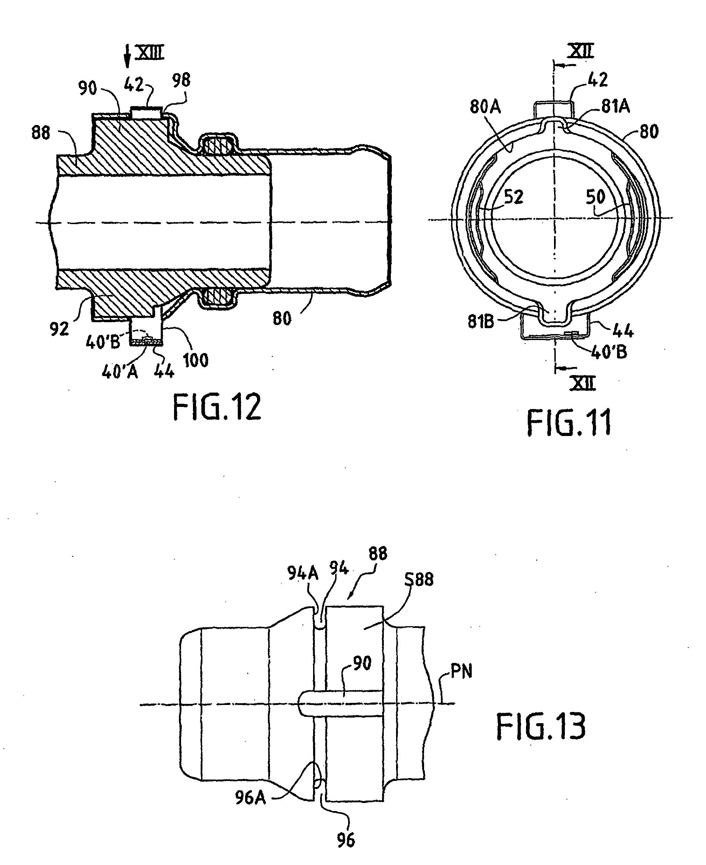

L'embout de connexion rapide des figures 11 et 12 est équipé de l'anneau de verrouillage 40 précédemment décrit en référence aux figures 7 et 8.

Comme le corps 10 de l'embout des figures 1 à 4, le corps 80 de cet embout est avantageusement réalisé en une seule pièce, par exemple en métal tel que de l'acier inoxydable, de l'aluminium ou de l'acier revêtu, ou bien en matière plastique. Cet embout est adapté à coopérer avec un tube 88 de conformation spéciale, qui doit être calé angulairement par rapport à lui. En effet, comme on le voit mieux sur les figures 12 et 13, le tube 88 présente deux nervures axiales de calage angulaire, respectivement 90 et 92, qui sont diamétralement opposées. Elles font saillie par rapport à la surface cylindrique S88 de ce tube. Pour son accrochage sur l'embout, le tube présente une gorge circulaire ou, plus précisément, deux portions de gorge, respectivement 94 et 96, qui s'étendent chacune sur environ ½ cercle, entre les deux nervures 90 et 92, de part et d'autre du plan diamétral PN d'alignement de ces nervures. Les surfaces d'accrochage proprement dites sont formées par les faces radiales 94A et 96A de ces gorges qui sont tournées vers l'extrémité libre du tube.

Les languettes 50 et 52 qui sont rabattues vers l'axe A pour former les arêtes de verrouillage pénètrent dans les gorges 94 et 96 pour coopérer avec ces faces radiales 94A et 96A. Ainsi, outre les avantages précités en matière de rigidité et d'élasticité, la conformation rentrante des arêtes de verrouillage permet d'adapter la connexion selon l'invention à des tubes de conformations diverses.

Les deux pontets 42 et 44 de l'anneau de verrouillage 40 sont respectivement adaptés aux nervures 90 et 92 du tube.

L'entrée 80A du corps de l'embout présente deux décrochements diamétralement opposés 81A et 81B, entre lesquels ses dimensions diamétrales sont maximales, pour permettre l'insertion des nervures 90 et 92 du tube. Ces décrochements s'étendent axialement environ jusqu'aux fentes 98 et 100 du corps de l'embout, à travers lesquelles passent respectivement les pontets 42 et 44 de l'anneau de verrouillage. Il faut noter qu'en lieu et place des décrochements 81A et 81B, on aurait pu choisir d'équiper le corps de l'embout de fentes axiales raccordant l'entrée dudit embout aux fentes 98 et 100.

Sur les figures qui viennent d'être décrites, le pontet 24, 44 ou 64 forme un U dont la base est sensiblement plane, parallèle à un plan diamétral de l'anneau de verrouillage. Cette base pourrait être légèrement courbe, avec une concavité tournée vers le centre de l'anneau pour naturellement rappeler les branches du U l'une vers l'autre lors du glissement et maintenir la symétrie de l'anneau par rapport au plan diamétral parallèle à ces branches.

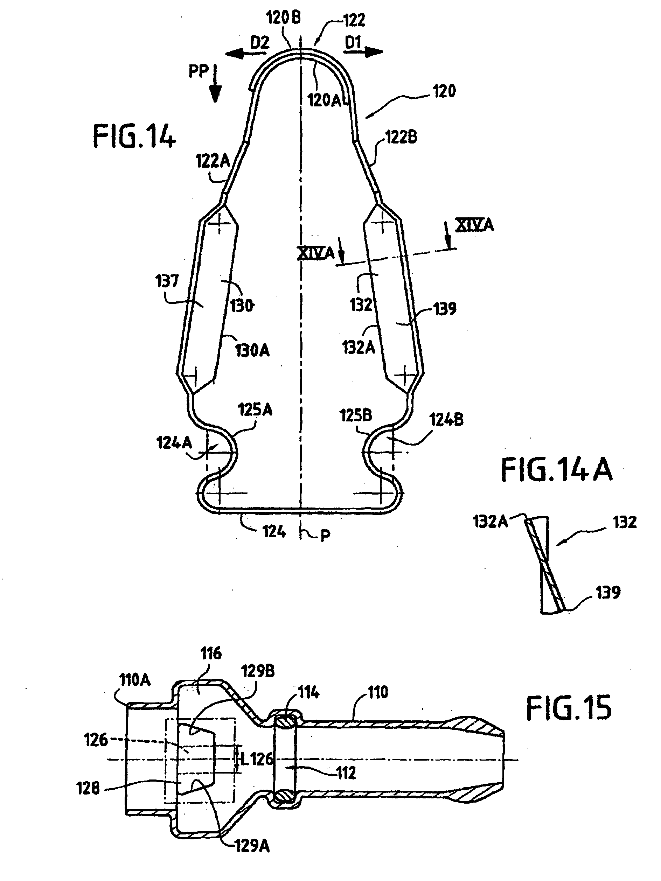

Sur la figure 14, on voit un anneau de verrouillage 120 qui comporte un pontet de déverrouillage 122 et deux zones de verrouillage, respectivement 130 et 132, disposées en regard l'une de l'autre, de part et d'autre d'un plan diamétral P par rapport auquel l'anneau est symétrique.

Comme les anneaux de verrouillage représentés à titre d'exemple sur les autres variantes, l'anneau 120 est fermé sur lui-même.

Ses deux extrémités 120A et 120B se chevauchent sans être fixées l'une à l'autre. Ainsi, lors d'une déformation élastique de l'anneau, ses deux extrémités glissent l'une contre l'autre. En particulier, lorsque l'on exerce une pression sur le pontet de déverrouillage 122 dans le sens de la flèche PP, le glissement des deux extrémités 120A et 120B l'une contre l'autre favorise l'écartement des arêtes de verrouillage 130 et 132. Ceci facilite la déformation élastique de l'anneau nécessaire au déverrouillage.

Les deux extrémités 120A et 120B sont conformées de manière à être rappelées en contact de glissement l'une contre l'autre. En particulier, comme on le voit sur la figure 14, elles présentent une forme concave lorsqu'on les considère depuis l'intérieur de l'anneau. De ce fait, elles constituent l'une pour l'autre des surfaces de rappel qui rappellent naturellement l'anneau dans sa configuration de verrouillage après une sollicitation de déverrouillage par pression sur le pontet dans le sens PP. En l'espèce, les extrémités 120A et 120B forment le pontet 124. La courbure des parties concaves des extrémités 120A et 120B est sensiblement constante.

Lorsque l'on exerce une pression dans le sens PP, les deux brins de la bande situés de part et d'autre du plan diamétral P ont tendance à s'écarter. En d'autres termes, l'extrémité 120A se déplace avec la zone de verrouillage 130 selon la direction D1, tandis que l'extrémité 120B se déplace avec l'arête 132 selon la direction opposée D2. Toutefois, la face extérieure de l'extrémité 120B coopère avec la face intérieure de l'extrémité 120A et, dans la mesure où la surface que détermine cette face intérieure présente une composante dirigée dans la direction D1, cette coopération rappelle naturellement l'extrémité 120B dans la direction D1, dès que la pression dans le sens PP cesse sur le pontet.

Les extrémités 120A et 120B, qui sont en contact de glissement, sont orientées parallèlement à la direction de l'axe A de l'embout. De même, les tronçons de liaison 122A et 122B du pontet avec, respectivement, les zones de verrouillage 130 et 132 sont orientés parallèlement à la direction de l'axe A.

Entre ces tronçons de liaison et les zones de verrouillage, la bande est vrillée, comme on le comprend en considérant la figure 14A. Elle présente ainsi deux portions inclinées dans lesquelles elle est inclinée sur toute sa largeur par rapport à l'axe A. Les faces avant de ces portions inclinées, qui sont orientées vers l'extérieur par rapport à la direction axiale qui est celle des tronçons de liaison, forment des rampes de guidage 137 et 139 écartées vers l'avant pour l'introduction du tube dans l'embout. Les bords arrières de ces portions inclinées forment les arêtes de verrouillage 130A et 132A proprement dites.

A l'opposé du pontet 122, l'anneau comprend un autre pontet 124. Celui-ci est raccordé aux arêtes de verrouillage 130 et 132 par des tronçons de liaison, respectivement 124A et 124B. Ces tronçons de liaison sont parallèles à la direction de l'axe A de l'embout de connexion.

Comme on le voit sur la figure 14, ils présentent chacun une ondulation, respectivement 125A et 125B, dont la concavité est tournée vers l'extérieur de l'anneau. Ces ondulations permettent de caler cet anneau par rapport au corps de l'embout 110 représenté sur la figure 15.

Ce corps 110 présente une cavité interne dont une première partie 112 est apte à coopérer avec des moyens d'étanchéité pour établir une liaison étanche entre le corps de l'embout et la périphérie externe d'un tube emmanché dans ce dernier. Par exemple, cette première partie a la forme d'une gorge annulaire contenant un joint 114.

L'anneau de verrouillage 120 est destiné à être disposé dans la deuxième partie 116 de la cavité, qui est située entre la première partie 114 et l'entrée 110A du corps de l'embout.

La paroi axiale du corps de l'embout présente, dans la région de cette deuxième partie 116, deux fentes diamétralement opposées, respectivement désignées par les références 126 et 128, respectivement aptes à coopérer avec les pontets 122 et 124 de l'anneau.

La figure 15 est une coupe axiale sur laquelle normalement seule la fente 128 est visible mais, pour la clarté de l'explication, la position de la fente 126 est indiquée en traits interrompus.

L'anneau de verrouillage 120 est apte à être disposé dans le corps de l'embout en étant engagé radialement à travers la fente 128. On voit que la fente 126 présente une longueur L126, mesurée dans la direction transversale à l'axe A du corps de l'embout, qui est inférieure à la longueur de la fente 128, mesurée dans la même direction.

La fente 126 est trop petite pour permettre l'introduction de l'anneau de verrouillage dans le corps de l'embout à travers elle. L'anneau doit donc être introduit à travers la fente 128, jusqu'à ce que le pontet 122 dépasse à travers la fente 126.

Les ondulations 125A et 125B précitées sont destinées à coopérer avec les côtés 129A et 129B de la fente 128, afin de déterminer le degré d'enfoncement maximal de l'anneau de verrouillage 120 dans le corps de l'embout. On voit que lesdits côtés 129A et 129B sont inclinés pour permettre le passage des portions inclinées de l'anneau de verrouillage sur lesquelles sont formées les zones de verrouillage.

Pour permettre l'introduction radiale de l'anneau de verrouillage de la manière précitée, les zones de verrouillage 130 et 132 sont élastiquement rapprochées l'une de l'autre, puisque l'écartement entre les bords 129A et 129B de la fente 128 correspond sensiblement à l'écartement entre les creux des ondulations 125A et 125B.

De même, dans la variante des figures 1 à 4, les deux fentes 26 et 28 à travers lesquelles dépassent respectivement les pontets 22 et 24 sont différentes l'une de l'autre.

Bien que la fente 26 ne soit normalement pas visible sur la coupe de la figure 4, sa position est indiquée en trait mixte sur cette figure. On voit qu'elle présente une longueur L26, mesurée transversalement à l'axe A, qui est inférieure à celle de la fente 28. En effet, le pontet 22 (de même que le pontet 42 ou 62) présente une longueur, mesurée dans le même sens, qui est inférieure à celle du pontet 24 (ou du pontet 44 ou 64).

L'anneau de verrouillage 20, 40 ou 60 peut être introduit dans le corps de l'embout de la figure 4 par un déplacement radial à travers la fente 28 dénommée fente d'introduction. Pour ce faire, les deux zones de verrouillage 30 et 32, 50 et 52 ou 70 et 72 sont rapprochées l'une de l'autre de manière à diminuer élastiquement le diamètre minimum de l'anneau. Celui-ci est introduit par son pontet le plus étroit 22, 42, 62, jusqu'à ce que ce pontet dépasse à travers la fente 26, que les tronçons de liaison 22A et 22B, 42A et 42B ou 62A et 62B reposent contre les bords 26A et 26B de la fente 26 et que les tronçons de liaison 24A, 24B, 44A, 44B ou 64A, 64B coopèrent avec les côtés 29A et 29B de la fente 28 pour retenir l'anneau de verrouillage à l'intérieur du corps de l'embout.

On voit sur la figure 4 que la fente d'introduction 28 présente une partie avant élargie pour permettre le passage des rampes de guidage 34, 36, 54, 56 ou 74, 76 de l'anneau de verrouillage dans le corps et une partie étroite qui coopère avec l'anneau de verrouillage pour le caler angulairement. En d'autres termes, la fente 28 est évasée vers l'avant, tandis que les parties arrières de ses côtés 29A et 29B sont parallèles à l'axe A. Des jambes du pontet 64 coopèrent avec ces parties arrière rectilignes pour caler l'anneau angulairement.

Quelle que soit la variante retenue, on constate sur les dessins que les anneaux de verrouillage 20, 40, 60 ou 120 sont disposés dans une tranche radiale dont l'épaisseur est sensiblement égale à la largeur de la bande dans laquelle ils sont formés, dans la région du ou des pontets.

Comme indiqué précédemment, le corps de l'embout peut être réalisé en métal ou en matière plastique. Les moyens d'étanchéité peuvent être disposés dans une gorge ou être maintenus en place par une bague de blocage, elle-même fixée au corps, par exemple par encliquetage. Qu'il soit ou non en plastique, le corps peut présenter des formes de calage du tube en rotation telles que 81A et 81 B visibles sur la figure 11.

## Revendications

1. Embout de connexion rapide susceptible d'être emmanché sur un tube (18 ; 88) qui présente une surface d'accrochage (34 ; 94A, 96A) sensiblement radiale distante de son extrémité libre, l'embout comprenant un corps (10 ; 80 ; 110) qui présente une cavité interne ayant une première partie (12 ; 112) susceptible de coopérer avec des moyens d'étanchéité (14 ; 114) pour établir une liaison étanche avec le tube et une deuxième partie (16 ; 116), qui est située entre la première partie de la cavité et l'entrée (10A ; 80A ; 110A) du corps de l'embout et dans laquelle est disposé un anneau de verrouillage (20 ; 40 ; 60 ; 120) retenu contre un arrachement hors du corps de l'embout par des moyens de retenue, cet anneau présentant au moins une zone de verrouillage (30, 32 ; 50, 52 ; 70, 72 ; 130, 132) située dans une région dans laquelle son rayon est minimum et au moins un pontet de déverrouillage (22, 24 ; 42, 44 ; 62, 64 ; 122, 124) situé dans une région dans laquelle son rayon est maximal, l'anneau étant susceptible, à partir d'une configuration de verrouillage dans laquelle la zone de verrouillage est apte à coopérer avec la surface d'accrochage du tube, d'être déformé élastiquement par une pression sur le pontet pour adopter une configuration de déverrouillage, la paroi de la cavité interne du corps présentant au moins une fente (26, 28 ; 98, 100 ; 126, 128) qui débouche dans la deuxième partie (16 ; 116) de la cavité et à travers laquelle dépasse ledit pontet de déverrouillage, l'anneau de verrouillage étant constitué par une bande de métal déformée plastiquement pour présenter, au moins, ladite zone de verrouillage et ledit pontet,
**caractérisé en ce que** l'anneau de verrouillage (20, 40, 60, 120) est fermé sur lui-même et présente deux extrémités (20A, 20B ; 40A, 40B ; 60A, 60B ; 120A, 120B) qui se chevauchent et qui sont susceptibles de glisser l'une contre l'autre lors d'une déformation élastique de l'anneau

2. Embout selon la revendication 1, **caractérisé en ce qu'**il présente des moyens (20'A, 20'B ; 40'A, 40'B ; 60'B) pour guider le glissement relatif des deux extrémités de l'anneau de verrouillage.

3. Embout selon la revendication 2, **caractérisé en ce que** les deux extrémités de l'anneau de verrouillage (20 ; 40 ; 60) comprennent un système à patte et à fente ou encoche (20'A, 20'B ; 40'A, 40'B ; 60'B).

4. Embout selon l'une quelconque des revendications 1 à 3, **caractérisé en ce que** le pontet (24 ; 44 ; 64 ; 124) est formé par lesdites extrémités de l'anneau en contact de glissement.

5. Embout selon l'une quelconque des revendications 1 à 4, **caractérisé en ce que**, dans la région du pontet de déverrouillage (22, 24 ; 42, 44 ; 62, 64 ; 122, 124), la bande dans laquelle est réalisé l'anneau de verrouillage (20 ; 40 ; 60 ; 120) est sensiblement parallèle à la direction axiale (A) de l'embout, tandis que la zone de verrouillage (30, 32 ; 50, 52 ; 70, 72 ; 130, 132) présente une déformation plastique formant une arête de verrouillage rentrante (30A, 32A ; 52A ; 71'A, 71'B ; 130A, 132A) qui, par rapport à la direction axiale de l'embout, est inclinée vers l'axe de l'embout dans le sens allant en s'éloignant de l'entrée (10A ; 80A ; 110A) du corps.

6. Embout selon l'une quelconque des revendications 1 à 5, **caractérisé en ce que** l'anneau de verrouillage (20 ; 40 ; 60 ; 120) présente deux zones de verrouillage (30, 32 ; 50, 52 ; 70, 72 ; 130, 132), qui sont disposées en vis-à-vis de part et d'autre d'un plan diamétral (P) et qui sont reliées au pontet de déverrouillage (22, 24 ; 42, 44 ; 62, 64 ; 122, 124) par des tronçons de liaison (22A, 22B, 24A, 24B ; 42A, 42B, 44A, 44B, 62A, 62B, 64A, 64B ; 122A, 122B, 124A, 124B) qui se trouvent dans la cavité interne (16 ; 116) du corps et **en ce que** ces tronçons de liaison sont parallèles à la direction axiale (A) de l'embout.

7. Embout selon l'une quelconque des revendications 1 à 6, **caractérisé en ce que** la bande formant l'anneau de verrouillage (120) est vrillée entre le pontet (122, 124) et la zone de verrouillage (130, 132).

8. Embout selon l'une quelconque des revendications 1 à 7, **caractérisé en ce que** l'anneau de verrouillage (20 ; 40 ; 60) présente au moins une ligne de pliage (33, 35 ; 55 ; 75) s'étendant sensiblement transversalement par rapport à la direction axiale (A) de l'embout, la zone de verrouillage (30, 32 ; 50, 52 ; 70, 72) étant formée par une partie de l'anneau qui se trouve à l'arrière de cette ligne par rapport à l'entrée (10A, 80A) du corps de l'embout et qui est incurvée vers l'axe (A) de l'embout à partir de ladite ligne.

9. Embout selon la revendication 8, **caractérisé en ce que** l'anneau de verrouillage présente au moins une rampe de guidage (37, 39 ; 57, 59 ; 77, 79) pour l'emmanchement de l'embout sur le tube, cette rampe étant formée par une partie dudit anneau qui se trouve à l'avant de la ligne de pliage (33, 35 ; 55 ; 75) et qui est incurvée de manière à s'éloigner de l'axe (A) de l'embout en se rapprochant de l'entrée du corps.

10. Embout selon les revendications 8 et 9, **caractérisé en ce que** l'anneau de verrouillage (20) présente une première ligne de pliage (35) à l'avant de laquelle est formée une rampe de guidage (37, 39) et une deuxième ligne de pilage (35') à l'arrière de laquelle est formée la zone de verrouillage (30, 32).

11. Embout selon l'une quelconque des revendications 1 à 10, **caractérisé en ce que** la zone de verrouillage (50, 52 ; 70, 72) est formée sur une languette découpée dans la bande et rabattue vers l'axe (A) de l'embout, cette languette étant rattachée à la bande par sa base (52B) située du côté de l'entrée du corps.

12. Embout selon l'une quelconque des revendications 1 à 11, **caractérisé en ce que** la zone de verrouillage (70, 72) comprend plusieurs arêtes de verrouillage (71'A, 71'B) formées, chacune, par le bord libre d'une languette ménagée par une entaille (71A, 71B) pratiquée dans la bande.

13. Embout selon l'une quelconque des revendications 1 à 12, **caractérisé en ce que** l'anneau de verrouillage (20 ; 40 ; 60 ; 120) comporte un premier et un deuxième pontet (22, 24 ; 42, 44 ; 62, 64 ; 122, 124) qui passent respectivement dans une première et une deuxième fente (26, 28 ; 98 ; 100 ; 126, 128) du corps de l'embout, au moins l'un de ces pontets étant un pontet de déverrouillage qui dépasse radialement hors de la fente dans laquelle il passe, l'anneau présentant une première zone de verrouillage (30 ; 50 ; 70 ; 130) située entre les deux pontets, d'un premier côté de l'anneau et une deuxième zone de verrouillage (32 ; 52 ; 72 ; 132), située entre les deux pontets, de l'autre côté de l'anneau.

14. Embout selon la revendication 13, **caractérisé en ce que** les deux zones de verrouillage (30, 32 ; 50, 52 ; 70, 72 ; 130, 132) sont aptes à être élastiquement rapprochées l'une de l'autre pour permettre l'introduction de l'anneau (20 ; 40 ; 60 ; 120) dans le corps par un déplacement radial à travers l'une (28 ; 128) des fentes, dite fente d'introduction, cependant que l'autre (26 ; 126) fente présente des dimensions empêchant l'introduction de l'anneau à travers elle.

15. Embout selon la revendication 14, **caractérisé en ce que** l'anneau (20, 40, 60) présente des rampes de guidage (34, 36 ; 54, 56 ; 74, 76) pour l'emmanchement de l'embout sur le tube, chaque rampe étant située dans la région d'une zone de verrouillage (30, 32 ; 50, 52 ; 70, 72) sur le bord avant de l'anneau et étant inclinée dans le sens allant en s'écartant de l'axe (A) de l'embout vers l'avant et **en ce que** la fente d'introduction présente une partie avant élargie pour permettre le passage desdites rampes lors de l'introduction (28) de l'anneau dans le corps et une partie arrière étroite apte à coopérer avec l'anneau de verrouillage pour caler ce dernier angulairement.

16. Embout selon l'une quelconque des revendications 1 à 15, **caractérisé en ce que** le corps (10 ; 80 ; 110) de l'embout est formé en une seule pièce.

## Patentansprüche

1. Schnellverbindungsstück zum Aufstecken auf ein Rohr (18; 88) mit einer vorwiegend radialen, von seinem freien Ende entfernten Verankerungsfläche (34; 94A), wobei das Verbindungsstück einen einen inneren Hohlraum aufweisenden Körper (10; 80; 110) umfaßt, wobei der Hohlraum zur Herstellung einer dichten Verbindung mit dem Rohr einen ersten mit Dichtungsmitteln zusammenwirkenden Teil (12; 112) und einen zwischen dem ersten Teil des Hohlraums und dem Eingang (10A; 80A; 110A) des Verbindungsstückskörpers angeordneten, einen durch Rückhaltemittel gegen ein Herausziehen aus dem Verbindungsstückkörper gesicherten Verriegelungsring (20, 40; 60; 120) umfassenden zweiten Teil (16; 116) aufweist, wobei dieser Ring an einer Stelle, an der sein Halbmesser am kleinsten ist mindestens eine Verriegelungszone (30,32; 50,52; 70;72; 130, 132) und an einer Stelle, an dem sein Halbmesser am größten ist mindestens einen Entriegelungsbügel (22, 24; 42, 44; 62, 64; 122, 124) aufweist, wobei der Ring von einer Verriegelungsstellung ausgehend, bei der die Verriegelungszone mit der Verankerungsfläche des Rohrs zusammenwirken kann, durch Ausübung eines Druckes auf den Bügel elastisch verformt werden kann, um eine Entriegelungsstellung einzunehmen, wobei die Wand des inneren Hohlraumes des Körpers mindestens einen, sich zum zweiten Teil (16, 116) hin öffnenden Schlitz (26, 28; 98, 100; 126, 128) aufweist, durch den der besagte Entriegelungsbügel hindurchgreift, wobei der Verriegelungsring aus einem plastisch verformten Metallstreifen für mindestens die besagte Verriegelungszone und den besagten Bügel besteht,
**dadurch gekennzeichnet, daß** der Verriegelungsring (20, 40, 60, 120) in sich selbst geschlossen ist und zwei einander überlappende Enden (20A, 20B; 40A, 40B; 60A, 60B, 120A, 120B) aufweist, die so ausgebildet sind, dass sie bei einer elastischen Verformung des Rings gegeneinander gleiten können.

2. Verbindungsstück nach Anspruch 1, **dadurch gekennzeichnet, daß** es Mittel (20'A, 20'B; 40'A, 40'B; 60'B) zum Führen der relativen Gleitbewegung der Enden des Verriegelungsringes aufweist.

3. Verbindungsstück nach Anspruch 2, **dadurch gekennzeichnet, daß** die beiden Enden des Verriegelungsringes (20; 40; 60) ein Laschen- und Schlitz- oder Rast-System (20'A, 20'B; 40'A, 40'B; 60'B) aufweisen.

4. Verbindungsstück nach einem der Ansprüche 1 bis 3, **dadurch gekennzeichnet, daß** der Bügel (24; 44; 64; 124) von den Enden des Ringes als Gleitkontakt gebildet wird.

5. Verbindungsstück nach einem der Ansprüche 1 bis 4, **dadurch gekennzeichnet, daß** im Bereich des Entriegelungsbügels (22, 24; 42, 44; 62, 64; 122, 124) das Band, in dem der Verriegelungsring (20; 40; 60; 120) ausgebildet ist, vorwiegend parallel zur axialen Richtung (1) des Verbindungsstückes verläuft, während die Verriegelungszone (30, 32; 50; 52; 70, 72; 130, 132) eine plastische Verformung aufweist, die eine einspringende Verriegelungskante (30A, 32A; 52A; 71'A, 71'B; 130A, 132A) bildet, die in vom Eingang (10A; 80A; 110A) des Körpers entgegengesetzter Richtung axialer Richtung schräg zur Achse des Verbindungsstückes verläuft.

6. Verbindungsstück nach einem der Ansprüche 1 bis 5, **dadurch gekennzeichnet, daß** der Verriegelungsring (20; 40; 60; 120) zwei Verriegelungszonen (30,32; 50,52; 70;72; 130, 132) aufweist, die sich beiderseits einer diametralen Ebene (P) gegenüberliegen und die über im Innern des inneren Hohlraumes (16, 116) angeordnete Verbindungsteilstücke (22A, 22B; 24A, 24B; 42A, 42B, 44A, 44B, 62A, 62B, 64A, 64B, 122A, 122B, 124A, 124B) mit dem Entriegelungsbügel (22, 24; 42, 44; 62, 64; 122, 124) verbunden sind und daß diese Verbindungsteilstücke parallel zur axialen Richtung (A) des Verbindungsstückes verlaufen.

7. Verbindungsstück nach einem der Ansprüche 1 bis 6, **dadurch gekennzeichnet, daß** das den Verriegelungsring (120) bildende Band zwischen dem Bügel (122, 124) und der Verriegelungszone (130, 132) ausgebuchtet ist.

8. Verbindungsstück nach einem der Ansprüche 1 bis 7, **dadurch gekennzeichnet, daß** der Verriegelungsring (20; 40; 60) mindestens eine vorwiegend quer zur axialen Richtung (1) des Verbindungsstückes verlaufende Faltlinie (33, 35; 55; 75) aufweist, wobei die Verriegelungszone von einem Teil des Ringes gebildet wird, der sich in Bezug zum Eingang (10A, 80A) des Verbindungsstückskörpers hinter dieser Faltlinie befindet und der zur Achse (A) des Verbindungsstückes hin von der besagten Linie aus gekrümmt ist.

9. Verbindungsstück nach Anspruch 8, **dadurch gekennzeichnet, daß** der Verriegelungsring mindestens eine Führungsrampe (37, 39; 57, 59; 77, 79) zum Aufstecken des Verbindungsstückes auf das Rohr aufweist, wobei diese Rampe durch einen Teil des besagten Ringes gebildet wird, der sich vorne an der Faltlinie (33, 35; 55; 75) befindet und der in Richtung Eingang des Körpers von der Achse (A) des Verbindungsstückes weg gekrümmt ist.

10. Verbindungsstück nach Anspruch 8 und 9, **dadurch gekennzeichnet, daß** der Verriegelungsring (20) eine erste Faltlinie (35), an der vorne eine Führungsrampe (37, 39) ausgebildet ist, und eine zweite Faltlinie (35'), an der hinten eine Verriegelungszone (30, 32) ausgebildet ist, aufweist.

11. Verbindungsstück nach einem der Ansprüche 1 bis 10, **dadurch gekennzeichnet, daß** die Verriegelungszone (50, 52; 70, 72) durch eine aus dem Band ausgeschnittene und in Richtung der Achse (A) des Verbindungsstückes umgeschlagene Lasche gebildet ist, wobei diese Lasche durch ihre an der Eingangsseite des Körpers angeordnete Basis (52B) mit dem Band verbunden ist.

12. Verbindungsstück nach einem der Ansprüche 1 bis 11, **dadurch gekennzeichnet, daß** die Verriegelungszone (70, 72) mehrere Verriegelungskanten (71'A, 71'B) umfaßt, die jeweils durch den freien Rand einer durch einen Einschnitt (71A, 71B) in das Band erzeugten Lasche gebildet werden.

13. Verbindungsstück nach einem der Ansprüche 1 bis 12, **dadurch gekennzeichnet, daß** der Verriegelungsring (20; 40; 60; 120) einen ersten und einen zweiten Bügel (22, 24; 42, 44; 62, 64; 122, 124) aufweist, die jeweils durch einen ersten und einen zweiten Schlitz (26, 28; 98; 100; 126, 128) des Verbindungsstückskörpers greifen, wobei mindestens einer der Bügel ein Entriegelungsbügel ist, der radial aus dem Schlitz, den er durchgreift, hervorsteht, wobei der Ring eine erste, zwischen den beiden Bügeln angeordnete Verriegelungszone (30; 50; 70; 130) auf einer ersten Seite des Rings und eine zweite, zwischen den Bügeln auf der anderen Seite des Ringes angeordnete Verriegelungszone (32; 52; 72; 132) aufweist.

14. Verbindungsstück nach Anspruch 13, **dadurch gekennzeichnet, daß** die beiden Verriegelungszonen (30, 32; 50, 52; 70, 72; 130, 132) so ausgebildet sind, daß sie elastisch gegeneinander bewegt werden können, um durch radiales Verschieben die Einführung des Ringes (20; 40; 60; 120) in einen der Schlitze (28; 128), Einführungsschlitz genannt, in den Körper zu ermöglichen, während der andere (26; 126) Schlitz Abmessungen aufweist, die das Einführen des Ringes durch ihn hindurch verhindert.

15. Verbindungsstück nach Anspruch 14, **dadurch gekennzeichnet, daß** der Ring (20, 40, 60) Führungsrampen (34, 36; 54, 56; 74, 76) zum Aufstecken des Verbindungsstückes auf das Rohr aufweist, wobei jede Rampe im Bereich einer Verriegelungszone (30, 32; 50, 52; 70, 72) am vorderen Rand des Rings angeordnet und von der Achse (A) des Verbindungsstückes schräg nach außen verläuft und daß der Einführungsschlitz einen verbreiterten vorderen Teil zur Durchführung der besagten Rampen bei der Einführung (28) des Ringes in den Körper und einen schmalen hinteren, mit dem Verriegelungsring zu dessen Arretierung zusammenwirkenden Teil aufweist.

16. Verbindungsstück nach einem der Ansprüche 1 bis 15, **dadurch gekennzeichnet, daß** der Körper (18; 80; 110) des Verbindungsstückes einstückig ausgeführt ist.

## Claims

1. A quick-connect coupling suitable for being fitted onto a tube (18; 88) which has a substantially radial catch surface (34; 94A, 96A) that is remote from its free end, the coupling comprising a body (10; 80; 110) provided with an internal cavity having a first portion (12; 112) suitable for co-operating with sealing means (14; 114) for establishing a leaktight connection with the tube, and a second portion (16; 116) which is situated between the first portion of the cavity and the inlet (10A; 80A; 110A) of the body of the coupling, and in which a locking ring (20; 40; 60; 120) is disposed that is retained by retaining means so as to be prevented from being torn out of the body of the coupling, said ring having at least one locking zone (30, 32; 50, 52; 70, 72; 130, 132) situated in a region in which its radius is at a minimum, and at least one unlocking bridge (22, 24; 42, 44; 62, 64; 122, 124) situated in a region in which its radius is at its maximum, the ring being suitable, starting from a locking configuration in which the locking zone is capable of co-operating with the catch surface of the tube, for being deformed elastically by means of pressure being exerted on the bridge to take up an unlocking configuration, the wall of the internal cavity of the body being provided with at least one slot (26; 28; 98, 100; 126, 128) which opens out into the second portion (16; 116) of the cavity and through which said unlocking bridge protrudes, the locking ring being constituted by a strip of metal deformed plastically so as to have at least said locking zone and said bridge;
said coupling being **characterised in that** the locking ring (20, 40, 60, 120) forms a closed loop and has two ends (20A, 20B; 40A, 40B; 60A, 60B; 120A, 120B) which overlap, and which are suitable for sliding one over the other while the ring is being elastically deformed.

2. A coupling according to claim 1, **characterised in that** it has means (20'A, 20'B; 40'A, 40'B; 60'B) for guiding the relative sliding of the two ends of the locking ring.

3. A coupling according to claim 2, **characterised in that** the two ends of the locking ring (20; 40; 60) are provided with a tab and slot or notch system (20'A, 20'B; 40'A, 40'B; 60'B).

4. A coupling according to any one of claims 1 to 3, **characterised in that** the bridge (24; 44; 64; 124) is formed by said ends of the ring in sliding contact.

5. A coupling according to any one of claims 1 to 4, **characterised in that**, in the region of the unlocking bridge (22, 24; 42, 44; 62, 64; 122, 124), the strip from which the locking ring (20; 40; 60; 120) is formed is substantially parallel to the axial direction (A) of the coupling, while the locking zone (30, 32; 50, 52; 70, 72; 130, 132) has a plastic deformation forming an inwardly-extending locking edge (30A, 32A; 52A; 71'A, 71'B; 130A, 132A) which, relative to the axial direction of the coupling, slopes towards the axis of the coupling going away from the inlet (10A; 80A; 110A) of the body.

6. A coupling according to any one of claims 1 to 5, **characterised in that** the locking ring (20; 40; 60; 120) has two locking zones (30, 32; 50, 52; 70, 72; 130, 132), which are disposed facing each other on either side of a diametral plane (P) and which are connected to the unlocking bridge (22, 24; 42, 44; 62, 64; 122, 124) via connecting segments (22A, 22B, 24A, 24B; 42A, 42B, 44A, 44B, 62A, 62B, 64A, 64B; 122A, 122B, 124A, 124B) which are situated inside the internal cavity (16; 116) of the body, and **in that** said connecting segments are parallel to the axial direction (A) of the coupling.

7. A coupling according to any one of claims 1 to 6, **characterised in that** the strip forming the locking ring (120) is twisted between the bridge (122, 124) and the locking zone (130, 132).

8. A coupling according to any one of claims 1 to 7, **characterised in that** the locking ring (20; 40; 60) has at least one fold line (33, 35; 55; 75) extending substantially transversely relative to the axial direction (A) of the coupling, the locking zone (30, 32; 50, 52; 70, 72) being formed by a portion of the ring that is situated behind said line relative to the inlet (10A, 80A) of the body of the coupling, and which is curved towards the axis (A) of the coupling from said line.

9. A coupling according to claim 8, **characterised in that** the locking ring has at least one guide ramp (37, 39; 57, 59; 77, 79) for fitting the coupling onto the tube, said ramp being formed by a portion of said ring that is situated in front of the fold line (33, 35; 55; 75) and that is curved away from the axis (A) of the coupling going towards the inlet of the body.

10. A coupling according to claim 8 and claim 9, **characterised in that** the locking ring (20) has a first fold line (35) in front of which a guide ramp (37, 39) is formed, and a second fold line (35') behind which the locking zone (30, 32) is formed.

11. A coupling according to any one of claims 1 to 10, **characterised in that** the locking zone (50, 52; 70, 72) is formed on a tongue cut out in the strip and folded over towards the axis (A) of the coupling, said tongue being connected to the strip via its base (52B) situated closer to the inlet of the body.

12. A coupling according to any one of claims 1 to 11, **characterised in that** the locking zone (70, 72) is provided with a plurality of locking edges (71'A, 71'B), each of which is formed by the free edge of a tongue provided by a notch (71A, 71B) formed in the strip.

13. A coupling according to any one of claims 1 to 12, **characterised in that** the locking ring (20; 40; 60; 120) is provided with first and second bridges (22, 24; 42, 44; 62, 64, 122, 124) that pass respectively through first and second slots (26, 28; 98; 100; 126, 128) in the body of the coupling, at least one of the bridges being an unlocking bridge that protrudes radially out of the slot through which it passes, the ring having a first locking zone (30; 50; 70; 130) situated between the two bridges, on a first side of the ring, and a second locking zone (32; 52; 72; 132) situated between the two bridges, on the other side of the ring.

14. A coupling according to claim 13, **characterised in that** the two locking zones (30, 32; 50, 52; 70, 72; 130, 132) are suitable for being moved elastically towards each other to enable the ring (20; 40; 60; 120) to be inserted into the body by radially moving it through an "insertion" one of the slots (28; 128), while the other slot (26; 126) has dimensions preventing the ring from being inserted through it.

15. A coupling according to claim 14, **characterised in that** the ring (20, 40, 60) has guide ramps (34, 36; 54, 56; 74, 76) for fitting the coupling onto the tube, each ramp being situated in the region of a locking zone (30, 32; 50, 52; 70, 72) on the front edge of the ring and sloping away from the axis (A) of the coupling going forwards, and **in that** the insertion slot has a wide front portion to pass said ramps while the ring (28) is being inserted into the body, and a narrow back portion suitable for co-operating with the locking ring to wedge said ring angularly.

16. A coupling according to any one of claims 1 to 15, **characterised in that** the body (10; 80; 110) of the coupling is formed in one piece.
